# EUROPEAN PATENT APPLICATION

(11) **EP 3 421 977 A1**
(43) Date of publication of application: **02.01.2019**
(21) Application number: 17178673.4
(22) Date of filing: 29.06.2017
(51) Int. Cl.: G01N 21/65, G01J 3/44, G02B 21/00, G01N 21/84

(54) **INTERFEROMETER FOR SUPERRESOLVED RAMAN MICROSCOPY**

(71) Applicant: Universiteit Gent, 9000 Gent (BE); IMEC VZW, 3001 Leuven (BE)
(72) Inventor: LE THOMAS, Nicolas, 9052 Zwijnaarde (BE); DIAZ TORMO, Alejandro, 9052 Zwijnaarde (BE); KHALENKOW, Dmitry, 9000 Gent (BE); SKIRTACH, Andre, 9000 Gent (BE); KUMAR, Saurav, 9052 Zwijnaarde (BE)
(74) Representative: DenK iP

(57) **Abstract**

A Raman microscope system for characterizing a sample of interest, the Raman microscope system comprising an excitation unit for inducing Raman scattering at a sample plane and a Raman scattering detection unit for detecting Raman scattering from the sample. The excitation unit comprises a beam splitter for splitting a radiation pump beam into two coherent pump beams, optical elements for guiding the two pump beams along two optical paths towards the sample plane so as to form two counter-propagating pump beams at the sample plane forming an interference pattern at the sample plane for inducing Raman scattering and a phase difference detection scheme for detecting a phase difference occurring at the sample plane from none-blocked parts of the two counter-propagating pump beams after their passage at the sample plane.

## Description

### Field of the invention

The invention relates to the field of methods and systems for characterizing materials. More particularly, the present invention relates to Raman microscopy as well as to a system for performing Raman microscopy with high resolution.

### Background of the invention

Accurate characterization of materials is essential for studying materials and devices. In view of limited dimensions of devices and parts thereof, it is essential that such characterization can be performed with high depth resolution. The latter is especially relevant for devices consisting of nanolayers. These have attracted increasing interest across a wide diversity of fields, such as optics, energy storage, biology and pharmacology.

Nanolayer devices are typically characterized via ellipsometry, electron microscopy or x-rays, however, these techniques share a common limitation in that data from complex stacks of nanolayers becomes increasingly difficult to interpret. More particularly, ellipsometry is only applicable to simple samples and it requires a complex fitting procedure. X-ray microscopy and Electron microscopy measurements further are expensive, have a bulky setup, require vacuum operation and special sample preparation is required.

Another known characterization technique is Raman microscopy. Its strength lies on acquiring the molecular fingerprint of the sample in a label-free manner, rendering it a broadly used characterization technique. Improving the depth resolution at which identification of materials using Raman microscopy can be performed may further improve this technique. It would for example allow discriminating adjacent nanolayers based on their molecular composition.

### Summary of the invention

It is an object of embodiments of the present invention to provide a Raman microscopy characterization system and method having a high resolution, e.g. with high depth resolution.

It is an advantage of embodiments of the present invention that characterization can be performed in a non-invasive way.

It is an advantage of embodiments of the present invention that the characterization does not require a complex fitting process with complex multiparameter models.

It is an advantage of embodiments of the present invention that both chemical and structural composition information of a sample can be obtained.

It is an advantage of embodiments of the present invention that the relative position of sub-elements of a sample can be determined.

It is an advantage of embodiments of the present invention that a thickness of a subelement of a sample can be determined.

It is an advantage of embodiments of the present invention that very thin and complex samples can be characterized in a label-free fashion, i.e. without the need for using any fluorophores, chemicals, fixatives, etc. It is an advantage of embodiments of the present invention that thin samples, e.g. down to nanometer scale, e.g. down to 6nm, can be characterized.

It is an advantage of embodiments of the present invention that a good resolution is obtained for a given direction. This direction may be a depth direction of a sample, e.g. allowing accurate analysis of for example stacks of films, but alternatively or additionally may include other directions.

The object is obtained with a method and system according to embodiments of the present invention.

The present invention relates to a Raman microscope system for characterizing a sample of interest, the Raman microscope system comprising an excitation system for inducing Raman scattering at a sample plane, the excitation system comprising
a beam splitter for splitting a radiation pump beam into two coherent pump beams optical elements for guiding the two coherent pump beams along two optical paths towards the sample plane, where the sample of interest is positioned, so as to form two counter-propagating pump beams at the sample plane, the two counter-propagating pump beams forming an interference pattern at the sample plane for inducing Raman scattering, and a phase difference detection scheme for detecting a phase difference occurring at the sample plane from none-blocked parts of the two counter-propagating pump beams after their passage at the sample plane,
the Raman microscope system furthermore comprising a Raman scattering detection system for detecting Raman scattering from the sample upon excitation by the two counter - propagating beams at the sample plane.
At the sample, the two-counter propagating beams may be counter-propagating in a depth direction of a sample, although embodiments are not limited thereto. In some embodiments, different sets of counter propagating beams may be used, counter propagating in different directions, for obtaining good resolution, not only in one direction but in a plurality of directions. Although in the different embodiments the system will be described for a single direction being the depth direction of a sample, it thus will be clear that the system could be adapted for probing in another direction or even for probing in a plurality of directions. Improving resolution may combine embodiments of the present invention with one or more other methods for improving resolution.
It is an advantage of embodiments of the present invention that characterization can be performed with a very good depth resolution, i.e. up to 6nm or even better. The latter assists in characterizing thin parts of a sample, e.g. thin films in a layer structure.
By applying a phase difference detection scheme, the phase difference at the sample plane can be evaluated using a detector being positioned at a completely different plane.
The Raman microscope further may comprise a translation stage for influencing the optical path length that one of the two counter-propagating beams travels, wherein the phase sensitive detection is part of a feedback loop for providing feedback to the translation stage for controlling and optionally adapting the path length according to a determined phase difference.
It is an advantage of embodiments of the present invention that a depth position in the sample can be relatively easily controlled by controlling the phase difference of the two counter-propagating beams at the sample plane.
The Raman microscope further may comprise an isolator for blocking pump radiation beams travelling along one of the optical paths; after their passage at the sample plane.
The Raman microscope furthermore comprises a beam splitter for splitting the induced Raman scattering beam from the pump beams and for guiding the induced Raman scattering beam towards the Raman scattering detection system.
The beam splitter for splitting the induced Raman scattering beam from the pump beams may be a dichroic filter.
The system furthermore may comprise a correlator for correlating the detected Raman scattering with the phase difference between the counter-propagating pump beams and thus correlating the detected Raman scattering with depth related position information.
The optical elements may comprise an objective lens in each of the optical paths along which the two counter-propagating pump beams are travelling prior to reaching the sample plane.
The translation stage may comprise an actuator for moving an optical element in one of the optical paths. It is an advantage of embodiments of the present invention that the translation stage in combination with the feedback loop significantly reduces the environmental phase noise. The moving element may be replaced by a phase modulator.
The system may comprise a radiation source for generating a radiation pump beam, the radiation source being a monochromatic laser.
The isolator may be a free space Faraday optical isolator. The isolator may be any suitable type of optical isolator.
It is an advantage of embodiments of the present invention that the technique for increasing resolution can be combined with other techniques for increasing resolution, e.g. in other directions.
The present invention also relates to a method for characterizing a sample of interest, the method comprising
creating at least one excitation pump beam for inducing Raman scattering at a sample plane, splitting the excitation pump beam into two coherent pump beams,
guiding the two coherent pump beams along two optical paths towards the sample plane, where the sample of interest is positioned, so as to form two counter-propagating pump beams at the sample plane, the two counter-propagating pump beams forming an interference pattern at the sample plane for inducing Raman scattering,
detecting a phase difference between pump beams at the sample plane and detecting Raman scattering from the sample upon excitation by the two counter-propagating beams at the sample plane.
It is possible to collect the Raman signal from both sides of the sample.
The excitation can be performed by creating two pump beams for instance for implementing stimulated Raman microscopy in view of improving the signal to noise ratio and consequently the depth resolution.
The method may comprise blocking pump radiation beams travelling along one of the optical paths, after their passage at the sample plane. The latter may result in a simplification of the phase sensitive detection scheme after interaction with the sample has taken place. One of the non-blocked parts may result from a back reflection.
The method may comprise controlling and optionally adapting the path length for one of the two counter-propagating beams according to the detected phase difference occurring at the sample plane.
The method further may comprise splitting the induced Raman scattering beam from the pump beams and guiding the induced Raman scattering beam towards the Raman scattering detection system.
The method may comprise correlating the detected Raman scattering with the phase difference between the counter-propagating pump beams and thus correlating the detected Raman scattering with depth related position information.
The present invention also relates to the use of a system as described above for thin film characterization or material characterization.
The present invention furthermore relates to the use of a system as described above for biochemical imaging.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

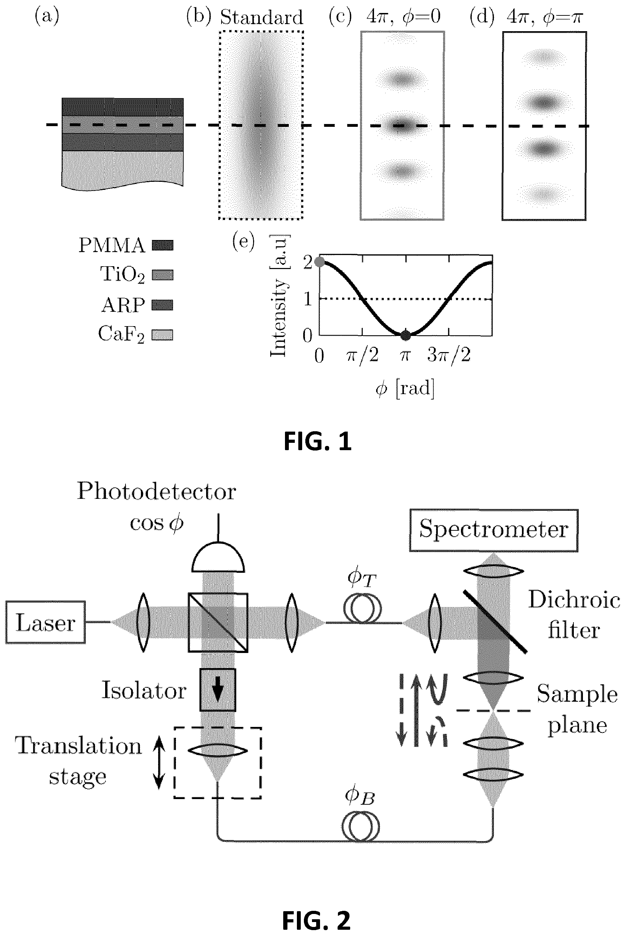

FIG. 1 illustrates the working principle of a 4π microscope. Only the pump beam is shown. (a) schematically illustrates the sample for a multilayer having a PMMA layer 43nm, a TiO₂ layer 23nm, an ARP layer 65nm and the CaF₂ substrate 1mm. (b) illustrates the standard confocal intensity point spread function. (c) and (d) illustrate the 4π point spread function showing the fringe pattern when both beams are in phase and out of phase, respectively. (e) intensity at the dashed line versus relative phase between counter-propagating beams ϕ. It is to be noted that the standard intensity (dotted line) is independent of the phase since there is only one beam producing it. This illustrates features and advantages of embodiments of the present invention.
FIG. 2 illustrates a schematic overview of the optical setup. Four optical beams are present in the interferometer. Two of them are blocked by the isolator (dashed arrows). The remaining two beams interfere producing the term cos ϕ at the photo detector, where ϕ is the difference between the phase shift induced by the bottom and top fibers, ϕ = ϕB - ϕT. This illustrates features and advantages of embodiments of the present invention.

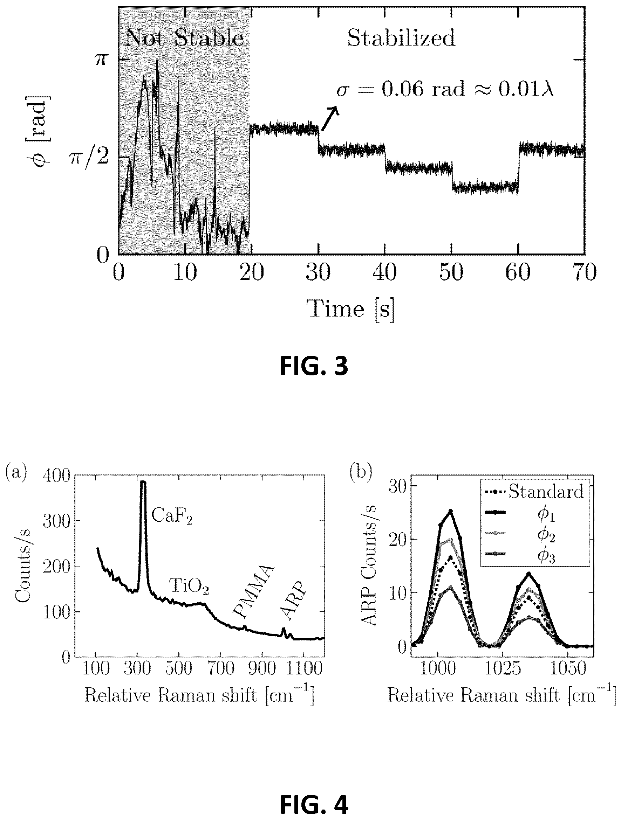

FIG. 3 demonstrates phase control and stabilization, whereby the shadowed area indicates the environmental phase noise in the free running system, illustrating features and advantages of embodiments of the present invention.
FIG. 4 illustrates 4π Raman spectra, whereby (a) a Full Raman spectrum is shown for the different material contributions and whereby (b) a zoom-in of the ARP peaks with removed background is shown. The dashed black lines indicate the standard confocal spectrum.

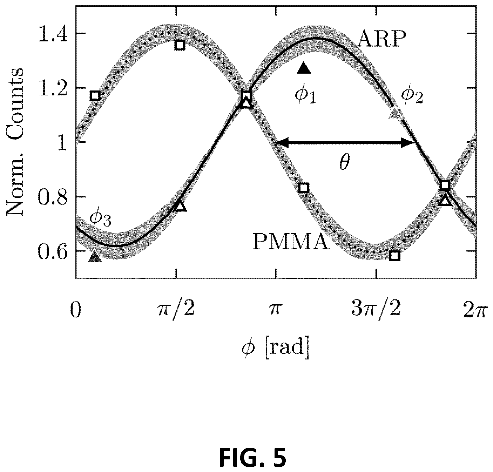

FIG. 5 illustrates the response of the ARP and PMMA layers versus the nominal phase. The results are normalized with respect to the standard response and fitted to a cosine curve. The measurements are repeated 5 times for error analysis. The shadowed areas indicate the standard deviation. The triangles and the straight line relate to the ARP experimental data points and their fit respectively. The process is replicated for PMMA yielding the squares and dashed curve. θ is the phase shift between the interferograms. The latter illustrates features and advantages of embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to Raman microscopy, reference is made to a laser-based microscope technique whereby Raman spectroscopy is performed. Raman spectroscopy thereby is a spectroscopic technique used to observe vibrational, rotational and other low-frequency modes in a system. It relies on inelastic scattering or Raman scattering of monochromatic light, usually from a laser in the visible, near infrared or near ultraviolet range. The radiation interacts with molecular vibrations, phonons or other excitations in the system, resulting in the energy of the laser photons being shifted up or down. The shift in energy gives information about the vibrational modes of the system and thus provides a structural fingerprint of the molecules in the system.
In a first aspect, the present invention relates to a Raman microscope system for characterizing a sample of interest. The Raman microscope system according to embodiments of the present invention comprises an excitation system for inducing Raman scattering at a sample plane. The excitation system comprises a beam splitter for splitting a radiation pump beam into two coherent pump beams and optical elements for guiding the two coherent pump beams along two optical paths towards the sample plane, where the sample of interest is positioned, so as to form two counter-propagating pump beams at the sample plane, the two counter-propagating pump beams forming an interference pattern at the sample plane for inducing Raman scattering. The excitation system also comprises a phase difference detection scheme (or detector unit implementing this) for detecting a phase difference occurring at the sample plane from none-blocked parts of the two counter-propagating pump beams after their passage at the sample plane. The system furthermore comprises a Raman scattering detection system for detecting Raman scattering from the sample upon excitation by the two counter-propagating beams at the sample plane. By applying a 4pi configuration in the Raman microscope advantageously a very good depth resolution, e.g. downto 6nm or even better, can be obtained. In some embodiments, the system comprises a translation stage for influencing the optical path length that one of the two counter-propagating beams travels, wherein the phase sensitive detection is part of a feedback loop for providing feedback to the translation stage for controlling and optionally adapting the path length according to a determined phase difference. In some embodiments, the Raman microscope further comprises an isolator for blocking pump radiation beams travelling along one of the optical paths, after their passage at the sample plane.
The excitation source may be any suitable radiation source, such as for example a laser. The translation stage may be any suitable translation stage. In the excitation source and/or the detection system, optical components may be present, such as for example optical lenses, optical splitters such as dichroic filters, etc. The system typically comprises for example objective lenses. The Raman scattering detection system may be a spectrometer for detecting shifts in the wavelength response. The phase difference detection scheme or detector unit implementing this may be a photodetector or any other detector for detecting a phase. Although in the different embodiments the system will be described for a single direction being the depth direction of a sample, it thus will be clear that the system could be adapted for probing in another direction or even for probing in a plurality of directions.
By way of illustration, embodiments of the present invention not being limited thereto, standard and optional features of an exemplary embodiment according to the present invention. The example illustrates the application of a 4n configuration to a Raman microscope in order to obtain a point spread function that depends on the phase difference between opposing pump beams. With this system, one can phase shift one of the beams to vertically scan the sample without actually moving it, as it would be done in conventional Raman microscopy. In addition, theoretically twice the Raman signal intensity of standard spontaneous Raman microscopy is obtained. The working principle of 4π microscopy is depicted in Fig. 1 and compared to conventional microscopy. In the latter a single objective lens normally provides better transversal resolution (in the image plane) than axial resolution (in the propagation direction). The stack of nanolayers in Fig. 1(a) would normally be probed with a typical intensity point spread function represented in Fig. 1(b). In 4π microscopy two counter-propagating coherent beams produce an interference pattern in the common focal spot, as shown in Fig. 1(c) and (d), reducing the effective illuminated volume and improving the axial resolution up to seven fold. The pump intensity at the nanolayers follows a sinusoidal curve when the relative phase between exciting beams φ is varied, see Fig. 1(e). Importantly, depending on their position, their sinusoidal responses will be shifted along the phase axis with respect to each other. Since these responses are obtained from their own independent fingerprints one can measure their positions with much higher accuracy than the diffraction limit would allow. We shall refer to φ as nominal phase henceforth.
In order to manipulate the position of the fringe pattern at the sample plane, the interferometer sketched in Fig. 2 was designed. It was tailored to measure and control the relative phase between both pump beams. Additionally, it was used to compensate for the phase noise in the system introduced by the fibers in the interferometer. There are four beams travelling throughout the interferometer, two transmitted and two reflected beams from the semitransparent sample. The isolator in the bottom arm blocks two of them (dashed arrows) and thus one records only a two-beam interferogram. The photodetector is sensitive to the cos φ term generated by the interference between the remaining two beams (solid arrows). The beam reflected at the sample plane and the transmitted one co- propagate over the same fiber and therefore they will suffer the same phase shift in their way to the detector. That made it possible to read the phase difference at the sample plane with the detector being at a completely different plane.
The control over the nominal phase is demonstrated in Fig. 3. The parameters of the Proportional-Integral-Derivative (PID) controller, which is part of the feedback loop, were adjusted to set the desired nominal phase. The feedback loop control was turned on after 20 seconds. In the stabilized regime we set the nominal phase to a different value every 10 seconds. The standard deviation of the different steps was approximately σ = 0.06 rad, or equivalently 0.01λ.
Further by way of illustration, embodiments of the present invention not being limited thereby, the analysis of a multilayer sample is discussed to highlight the potential of embodiments of the present invention. 4n Raman microscopy of the multilayer sample depicted in Fig. 1(b) that consists of three stacked nanolayers on top of a 1 mm CaF2 substrate is described. The layers, from top to bottom are: polymethyl methacrylate (PMMA), amorphous titanium oxide (TiO2) and e-beam resist (ARP). The PMMA and ARP layers were spin- coated, whereas the TiO2 was deposited via sputtering. The molecular composition of the multilayer stack is indicated in Fig. 4(a). The molecules from each layer can be identified by their unique peaks. In particular, TiO2 presents a broader fingerprint than the other components, from 0 to 630 cm⁻¹. Overall, their main spectral features are separated allowing to study them independently. In Fig. 4(b) the ARP Raman peaks are plotted for the standard measurement and for different nominal phases, demonstrating a precise phase control of the fringe pattern at the sample plane. The standard measurement is done under the same conditions as the 4n measurements except that it is incoherent, i.e. it is taken under high phase noise conditions forced into the system.
In Fig. 5 the intensity of the highest ARP and PMMA Raman peaks are plotted for different nominal phases φ. Since the vertical axis is normalized with respect to the standard measurement, it represents the enhancement factor. The data are fitted to a cosine curve with a unity offset to obtain its amplitude and phase shift.
Instead of the expected enhancement factor of 2, we recorded a factor of 1.41. This factor is directly linked to the contrast of the interference pattern at the sample plane, which can be reduced for many reasons. The width of the layers themselves partially explains the reduced experimental contrast. As a reference, the particular case of a 64.5 nm ARP layer with refractive index nARP = 1.56 yields a contrast of 1.89. The other relevant factor reducing the contrast is the aberration suffered by the bottom beam due to the 1 mm thick CaF2 substrate. The phase shift θ = 2.3 ± 0.1 rad between the ARP and PMMA interferograms in Fig. 5 is related to the optical length between these layers. If both Raman signals came exactly from the same plane the cosine fits would overlap. For such sub-wavelength layer thicknesses the strongest Raman peaks are collected when a fringe maximum sits at their barycenters. Consequently, the phase shift stems from the different optical lengths the pump has to travel to reach the layer barycenters. Based on the phase shift θ we determined an optical length between ARP and PMMA layers of 141 ± 6 nm.

For comparison purposes the sample was also characterized by ellipsometry, which uses fitting models to extract the sample information. However, due to the high number of fitting parameters, i.e. refractive indices and thicknesses of all the layers, the result was inconsistent. For that reason, a dedicated single-layer sample was fabricated for each material of the stack and determined their nominal thicknesses. The fabrication process of these single-layer samples was the same as in the multilayer stack. The thicknesses obtained were: 43 nm, 23 nm and 65 nm for PMMA, TiO2 and ARP, respectively. The refractive indices were: n_{p M M A}=1.48, n_{TiO2} =2.2 and n_{ARP} =1.56. From these values one could calculate the total optical path separation between the centers of the PMMA and ARP layers. A value of 131 ± 8 nm was obtained, in line with the 4n Raman microscopy result.

The above experiments illustrate that 4n Raman microscopy can advantageously be used for the characterization of a nanolayer stack. The Raman signal could be enhanced by a factor of 1.41 compared to standard confocal microscopy and at the same time a super resolution of 6nm could be obtained with regard to the optical length. The fundamental advantage of this technique is that it provides the Raman fingerprint of the sample under study and therefore is suited to simultaneously study several layers.
The information provided by this technique renders it an enabling tool to measure the thickness, refractive index and/or position of multiple layers within a layer stack with deep sub-wavelength accuracy. As with other tools, the refractive index and/or physical thickness could be extracted from the optical length data by measuring the sample under various angles of incidence or pump wavelengths. Local changes in the material structure can also be detected from diffraction limited areas since they are reflected on the Raman fingerprint.

In one aspect, the present invention relates to a method for characterizing a sample of interest. The method comprises inducing at least one excitation pump beam for inducing Raman scattering at a sample plane and splitting the excitation pump beam into two coherent pump beams. The method also comprises guiding the two coherent pump beams along two optical paths towards the sample plane, where the sample of interest is positioned, so as to form two counter-propagating pump beams at the sample plane, the two counter-propagating pump beams forming an interference pattern at the sample plane for inducing Raman scattering. The method also comprises detecting a phase difference between pump beams at the sample plane. The method furthermore comprises detecting Raman scattering from the sample upon excitation by the two counter-propagating beams at the sample plane. Other optional steps may correspond with the functionality of components as described in the first aspect.

In one aspect, the present invention also relates to the use of a system according to the first aspect, for one of a wide variety of applications, such as for example thin film characterization, biochemical imaging studies and material sciences.

## Claims

1. A Raman microscope system for characterizing a sample of interest, the Raman microscope system comprising
- an excitation system for inducing Raman scattering at a sample plane, the excitation system comprising
- a beam splitter for splitting a radiation pump beam into two coherent pump beams
- optical elements for guiding the two coherent pump beams along two optical paths towards the sample plane, where the sample of interest is positioned, so as to form two counter-propagating pump beams at the sample plane, the two counter-propagating pump beams forming an interference pattern at the sample plane for inducing Raman scattering,
- a phase difference detection scheme for detecting a phase difference occurring at the sample plane from none-blocked parts of the two counter-propagating pump beams after their passage at the sample plane,
and
- a Raman scattering detection system for detecting Raman scattering from the sample upon excitation by the two counter-propagating beams at the sample plane.

2. A Raman microscope system according to claim 1, the Raman microscope further comprising a translation stage for influencing the optical path length that one of the two counter-propagating beams travels, wherein the phase sensitive detection is part of a feedback loop for providing feedback to the translation stage for controlling and optionally adapting the path length according to a determined phase difference.

3. A Raman microscope system according to any of the previous claims, wherein the Raman microscope further comprises an isolator for blocking pump radiation beams traverlling along one of the optical paths; after their passage at the sample plane.

4. A Raman microscope system according to any of the previous claims, wherein the Raman microscope furthermore comprises a beam splitter for splitting the induced Raman scattering beam from the pump beams and for guiding the induced Raman scattering beam towards the Raman scattering detection system.

5. A Raman microscope system according to claim 3, wherein the beam splitter for splitting the induced Raman scattering beam from the pump beams is a dichroic filter.

6. A Raman microscope system according to any of the previous claims, wherein the system furthermore comprises a correlator for correlating the detected Raman scattering with the phase difference between the counter-propagating pump beams and thus correlating the detected Raman scattering with depth related position information.

7. A Raman microscope system according to any of the previous claims, wherein the optical elements comprise an objective lens in each of the optical paths along which the two counter-propagating pump beams are travelling prior to reaching the sample plane.

8. A Raman microscope system according to any of the previous claims in as far as dependent on claim 2, wherein the translation stage comprises an actuator for moving an optical element in one of the optical paths.

9. A Raman microscope system according to any of the previous claims, wherein the system comprises a radiation source for generating a radiation pump beam, the radiation source being a monochromatic laser and/or wherein the isolator is a free space Faraday optical isolator.

10. A Raman microscope system according to any of the previous claims, wherein the direction of the counter-propagating beams corresponds with a z-direction of a sample under study.

11. A method for characterizing a sample of interest, the method comprising
- inducing at least one excitation pump beam for inducing Raman scattering at a sample plane,
- splitting the excitation pump beam into two coherent pump beams,
- guiding the two coherent pump beams along two optical paths towards the sample plane, where the sample of interest is positioned, so as to form two counter-propagating pump beams at the sample plane, the two counter-propagating pump beams forming an interference pattern at the sample plane for inducing Raman scattering,
- detecting a phase difference between pump beams at the sample plane
and
- detecting Raman scattering from the sample upon excitation by the two counter-propagating beams at the sample plane.

12. A method according to claim 11, the method comprising controlling and optionally adapting the path length for one of the two counter-propagating beams according to the detected phase difference occurring at the sample plane.

13. A method according to any of claims 11 to 12, the method further comprising splitting the induced Raman scattering beam from the pump beams and guiding the induced Raman scattering beam towards the Raman scattering detection system.

14. A method according to any of claims 11 to 13, the method comprising correlating the detected Raman scattering with the phase difference between the counter-propagating pump beams and thus correlating the detected Raman scattering with depth related position information.

15. Use of a system according to any of claims 1 to 10 for thin film characterization or material characterization or for biochemical imaging.
